# EUROPEAN PATENT APPLICATION

(11) **EP 3 101 965 A1**
(43) Date of publication of application: **07.12.2016**
(21) Application number: 14881369.4
(22) Date of filing: 29.07.2014
(51) Int. Cl.: H04W 60/00

(54) **METHOD AND APPARATUS FOR ADJACENT NODE REGISTRATION, AND METHOD AND SYSTEM FOR CROSSING NODE REGISTRATION**

(30) Priority: 29.01.2014 CN 201410043143
(71) Applicant: ZTE Corporation, Shenzhen, Guangdong 518057 (CN)
(72) Inventor: HONG, Yingjie, Shenzhen Guangdong 518057 (CN); LI, Qiuting, Shenzhen Guangdong 518057 (CN); LI, Mingdong, Shenzhen Guangdong 518057 (CN); HUANG, Zheng, Shenzhen Guangdong 518057 (CN)
(74) Representative: Lavoix
(86) International application number: PCT/CN2014/083254
(87) International publication number: WO 2015/113387

(57) **Abstract**

Disclosed are a method and apparatus for adjacent node registration, and a method and system for cross-node registration. The method includes that: a requester Application Entity (AE) or Common Service Entity (CSE) sends a request message to an adjacent CSE thereof to request simplified registration, wherein a resource type parameter of the request message is set as a simplified registration resource type and resource content of the request message is set as a simplified registration resource to be created, or the resource type parameter of the request message is set as an AE or CSE registration resource type, the resource content of the request message is set as an AE or CSE registration resource to be created, and a registration object attribute or sub-resource of the AE or CSE registration resource is set as an AE or CSE simplified registration identifier; and the CSE which received the request message identifies that the request message is a simplified registration request, and creates resource in the simplified registration resource type of the requester AE or CSE according to the resource content of the request message.

## Description

### TECHNICAL FIELD

The present disclosure relates to an internet of things technology, and in particular to a method and apparatus for adjacent node registration, and a method and system for cross-node registration.

### BACKGROUND

In an international standard of one Machine to Machine (oneM2M, which is a kind of internet of things), a logic entity, a device and an interface are defined as follows.

An Application Entity (AE) is an application logic entity in the oneM2M internet of things.

A Common Service Entity (CSE) contains a set of service functions defined by oneM2M. These functions are opened to the AE via an Mca interface, to other CSEs via an Mcc interface and to an underlying Network Service Entity (NSE) via an Mcn interface.

An NSE provides underlying network service for a CSE.

A node may contain at least one CSE and/or an AE, and an internet-of-things device or a gateway or a service platform may contain a node.

An Application Dedicate Node (ADN) contains at least one AE, and does not contain a CSE, and the AE of the node may be defined as an ADN-AE.

An Application Service Node (ASN) contains a CSE and at least one AE, the AE of the node may be defined as an ASN-AE, and the CSE of the node may be defined as an ASN-CSE.

A Middle Node (MN) contains a CSE and may contain an AE, the AE of the node may be defined as an MN-AE, and the CSE of the node may be defined as an MN-CSE.

An Infrastructure Node (IN) contains a CSE and may contain an AE, the AE of the node may be defined as an IN-AE, and the CSE of the node may be defined as an IN-CSE.

A node-less AE is an IN-AE provided by an application Service Provider (SP).

Mca is a communication interface between an AE and a CSE defined by oneM2M.

Mcc is a communication interface between a CSE and a CSE defined by oneM2M.

Mcn is a communication interface between a CSE and an NSE defined by oneM2M.

Mcc' is a communication interface between an IN-CSE and an IN-CSE of two M2M SP domains defined by oneM2M.

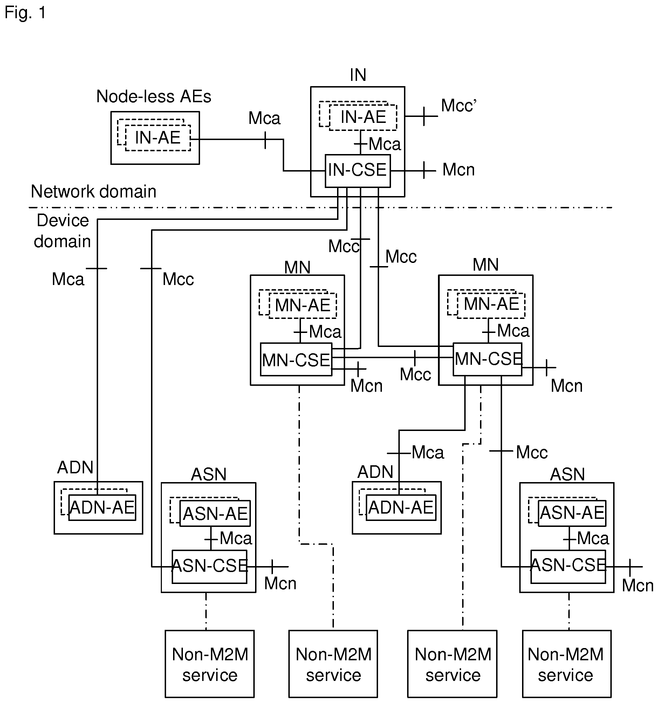

A relationship among the abovementioned logic entities and the devices refers to Fig. 1.

An AE or a CSE needs to be registered to a CSE adjacently connected thereto, and an AE registration resource and a CSE registration resource are created after registration. An existing method has the defects as follows.

After an AE or a CSE is registered to a plurality of adjacent CSEs, a plurality of repeated registration resources will be created, which makes it inconvenient to manage registration resources; and
Cross-node (cross-CSE) registration cannot be implemented.

### SUMMARY

In order to solve the existing technical problems, the embodiments of the present disclosure provide a method and apparatus for adjacent node registration, and a method and system for cross-node registration.

According to a first embodiment of the present disclosure, a method for adjacent node registration is provided, which includes that:
a requester AE or CSE sends a request message to an adjacent CSE thereof so as to request simplified registration,
wherein a resource type parameter of the request message is set as a simplified registration resource type, and resource content of the request message is set as a simplified registration resource to be created; or the resource type parameter of the request message is set as an AE or CSE registration resource type, the resource content of the request message is set as an AE or CSE registration resource to be created, and a registration object attribute or sub-resource of the AE or CSE registration resource is set as an AE or CSE simplified registration identifier.

According to a second embodiment of the present disclosure, a method for adjacent node registration is provided, which includes that:
a CSE receives a request message from an adjacent requester AE or CSE, wherein a resource type parameter of the request message is set as a simplified registration resource type, and resource content of the request message is set as a simplified registration resource to be created; or the resource type parameter of the request message is set as an AE or CSE registration resource type, the resource content of the request message is set as an AE or CSE registration resource to be created, and a registration object attribute or sub-resource of the AE or CSE registration resource is set as an AE or CSE simplified registration identifier; and
the CSE which received the request message identifies that the request message is a simplified registration request, and creates resource in the simplified registration resource type of the requester AE or CSE according to the resource content of the request message.

According to a third embodiment of the present disclosure, an apparatus for adjacent node registration is provided, which is applied to a requester AE or CSE and includes:
a message sending module, configured to send a request message to an adjacent CSE of the requester AE or CSE so as to request simplified registration; and
a setting module, configured to set a resource type parameter of the request message as a simplified registration resource type and set resource content of the request message as a simplified registration resource to be created, or set the resource type parameter of the request message as an AE or CSE registration resource type, set the resource content of the request message as an AE or CSE registration resource to be created, and set a registration object attribute or sub-resource of the AE or CSE registration resource as an AE or CSE simplified registration identifier.

According to a fourth embodiment of the present disclosure, an apparatus for adjacent node registration is provided, which is applied to an adjacent CSE of a requester AE or CSE and includes:
a receiving module, configured to receive a request message from the requester AE or CSE, wherein a resource type parameter of the request message is set as a simplified registration resource type, and resource content of the request message is set as a simplified registration resource to be created; or the resource type parameter of the request message is set as an AE or CSE registration resource type, the resource content of the request message is set as an AE or CSE registration resource to be created, and a registration object attribute or sub-resource of the AE or CSE registration resource is set as an AE or CSE simplified registration identifier; and
a registration module, configured to identify that the request message is a simplified registration request, and create resource in the simplified registration resource type of the requester AE or CSE according to the resource content of the request message.

According to a fifth embodiment of the present disclosure, a method for cross-node registration is provided, which includes that:
a requester AE or CSE sends a request message to an adjacent CSE thereof so as to request simplified registration, wherein a resource type parameter of the request message is set as a simplified registration resource type and resource content of the request message is set as a simplified registration resource to be created; or the resource type parameter of the request message is set as an AE or CSE registration resource type, the resource content of the request message is set as an AE or CSE registration resource to be created, and a registration object attribute or sub-resource of the AE or CSE registration resource is set as an AE or CSE simplified registration identifier;
after the simplified registration of the requester AE or CSE to the adjacent CSE is completed, the adjacent CSE sends a cross-node registration request message to a target CSE, wherein a target address of the cross-node registration request message is set as an address of the target CSE, and the target CSE is a non-adjacent CSE of the requester AE or CSE; and
after receiving the cross-node registration request message, the target CSE creates resource in a registration type of the requester AE or CSE according to resource content in the message.

According to a sixth embodiment of the present disclosure, a system for cross-node registration is provided, including a requester AE or CSE, an adjacent CSE of the requester AE or CSE, and a target CSE;
the requester AE or CSE is configured to send a request message to the adjacent CSE thereof so as to request simplified registration, wherein a resource type parameter of the request message is set as a simplified registration resource type and resource content of the request message is set as a simplified registration resource to be created; or the resource type parameter of the request message is set as an AE or CSE registration resource type, the resource content of the request message is set as an AE or CSE registration resource to be created, and a registration object attribute or sub-resource of the AE or CSE registration resource is set as an AE or CSE simplified registration identifier;
the adjacent CSE is configured to create resource in the simplified registration resource type of the requester AE or CSE according to the resource content of the request message;
the requester AE or CSE is further configured to send, after the simplified registration to the adjacent CSE is completed, a cross-node registration request message to the target CSE via the adjacent CSE, wherein a target address of the cross-node registration request message is set as an address of the target CSE, and the target CSE is a non-adjacent CSE of the requester AE or CSE; and
the target CSE is configured to create, after receiving the cross-node registration request message, resource in a registration type of the requester AE or CSE according to resource content in the message.

According to a seventh embodiment of the present disclosure, a computer readable storage medium is provided, which includes a set of computer executable instructions, the instructions being configured to execute the method according to the first embodiment of the present disclosure.

According to an eighth embodiment of the present disclosure, a computer readable storage medium is provided, which includes a set of computer executable instructions, the instructions being configured to execute the method according to the second embodiment of the present disclosure.

According to the method and apparatus for adjacent node registration provided by the embodiments of the present disclosure, simplified registration is performed between a requester AE or CSE and an adjacent CSE based on a defined simplified registration resource type, thereby solving the problem in the conventional art that it is inconvenient to manage registration resources due to creation of a plurality of repeated registration resources after a requester AE or CSE is registered to a plurality of adjacent CSEs. According to the method and system for cross-node registration provided by the embodiments of the present disclosure, cross-node registration from a requester AE or CSE to a target CSE is implemented on the basis of the method and apparatus for adjacent node registration.

### BRIEF DESCRIPTION OF THE DRAWINGS

Fig. 1 is a diagram illustrating a relationship among the logic entities and the devices defined in oneM2M;
Fig. 2 is a flow chart showing a method for adjacent node registration according to an embodiment of the present disclosure;
Fig. 3 is a structural diagram illustrating an apparatus for adjacent node registration located at a requester AE or CSE according to an embodiment of the present disclosure;
Fig. 4 is a structural diagram illustrating an apparatus for adjacent node registration located at an adjacent CSE of a requester AE or CSE according to an embodiment of the present disclosure;
Fig. 5 is a flow chart showing a method for cross-node registration according to an embodiment of the present disclosure;
Fig. 6 is a flow chart showing a simplified registration method for an AE and a CSE according to an embodiment of the present disclosure;
Fig. 7 is a flow chart showing an inter-CSE simplified registration method according to an embodiment of the present disclosure;
Fig. 8 is a flow chart showing a cross-layer simplified registration and cross-layer registration method for an AE according to an embodiment of the present disclosure;
Fig. 9 is a flow chart showing a cross-layer simplified registration and cross-layer registration method for a CSE according to an embodiment of the present disclosure;
Fig. 10 is a flow chart showing another simplified registration method for an AE and a CSE according to an embodiment of the present disclosure;
Fig. 11 is a flow chart showing another inter-CSE simplified registration method according to an embodiment of the present disclosure;
Fig. 12 is a flow chart showing another cross-layer simplified registration and cross-layer registration method for an AE according to an embodiment of the present disclosure; and
Fig. 13 is a flow chart showing another cross-layer simplified registration and cross-layer registration method for a CSE according to an embodiment of the present disclosure.

### DETAILED DESCRIPTION

The technical solutions of the present disclosure are further illustrated below with reference to the drawings and specific embodiments in detail.

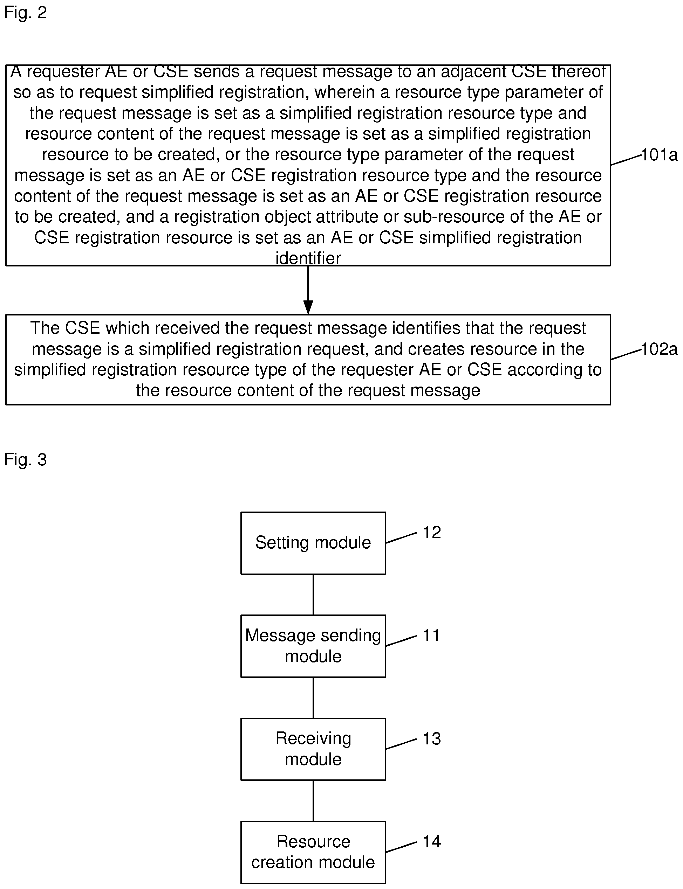

In order to solve the problems in the conventional art, the embodiments of the present disclosure provide a method for adjacent node registration, which is configured to implement simplified registration of a resource structure-based internet-of-things AE or CSE to an adjacent CSE connected thereto. The registration method, in the embodiments of the present disclosure, is defined as a simplified registration method. As shown in Fig. 2, the method mainly includes the steps as follows.

Step 101 a: A requester AE or CSE sends a request message to an adjacent CSE thereof so as to request simplified registration.

Herein, a resource type parameter of the request message is set as a simplified registration resource type and resource content of the request message is set as a simplified registration resource to be created. Alternatively, the resource type parameter of the request message is set as an AE or CSE registration resource type and the resource content of the request message is set as an AE or CSE registration resource to be created. A registration object attribute or sub-resource of the AE or CSE registration resource is set as an AE or CSE simplified registration identifier.

In an implementation mode of the present disclosure, when the resource type parameter of the request message is set as the simplified registration resource type and the resource content of the request message is set as the simplified registration resource to be created, a registration object attribute or sub-resource of the simplified registration resource may be set as the AE or CSE simplified registration identifier.

The operation of Step 101 a is implemented at a requester AE or CSE side.

Step 102a: The CSE which received the request message identifies that the request message is a simplified registration request, and creates resource in the simplified registration resource type of the requester AE or CSE according to the resource content of the request message.

The operation of Step 102a is implemented on the adjacent CSE of the requester AE or CSE, and the adjacent CSE receives a request message from the requester AE or CSE.

In an implementation mode of the present disclosure, after creation of the resource in the simplified registration resource type of the requester AE or CSE is completed, the CSE which received the request message returns a registration result response to the requester AE or CSE.

The requester AE or CSE receives the registration result response returned after the adjacent CSE creates the simplified registration resource;
or, the requester CSE receives the registration result response returned after the adjacent CSE creates the simplified registration resource, and when the registration result response is a registration success response, the resource in the simplified registration resource type of the adjacent CSE is created on the requester CSE.

In correspondence to the above method for adjacent node registration, the embodiments of the present disclosure provide an apparatus for adjacent node registration, which is applied to a requester AE or CSE. As shown in Fig. 3, the apparatus includes:
a message sending module 11, configured to send a request message to an adjacent CSE of the requester AE or CSE so as to request simplified registration; and
a setting module 12, configured to set a resource type parameter of the request message as a simplified registration resource type and set resource content of the request message as a simplified registration resource to be created, or set the resource type parameter of the request message as an AE or CSE registration resource type and set the resource content of the request message as an AE or CSE registration resource to be created, and set a registration object attribute or sub-resource of the AE or CSE registration resource as an AE or CSE simplified registration identifier.

In an implementation mode, the setting module 12 is configured to also set, when the resource type parameter of the request message is set as the simplified registration resource type and the resource content of the request message is set as the simplified registration resource to be created, a registration object attribute or sub-resource of the simplified registration resource as the AE or CSE simplified registration identifier.

In an implementation mode, the apparatus further includes:
a receiving module 13, configured to receive a registration result response returned after the adjacent CSE creates the simplified registration resource; and
a resource creation module 14, configured to create, when the receiving module 13 of the requester CSE receives a registration success response returned by the adjacent CSE, resource in the simplified registration resource type of the adjacent CSE on the requester CSE.

The message sending module 11 and the receiving module 13 may be implemented by a communication function chip of the apparatus for adjacent node registration, and the setting module 12 and the resource creation module 14 may be implemented by a Central Processing Unit (CPU), a Micro Processing Unit (MPU), a Digital Signal Processor (DSP) or a Field-Programmable Gate Array (FPGA) in the apparatus for adjacent node registration.

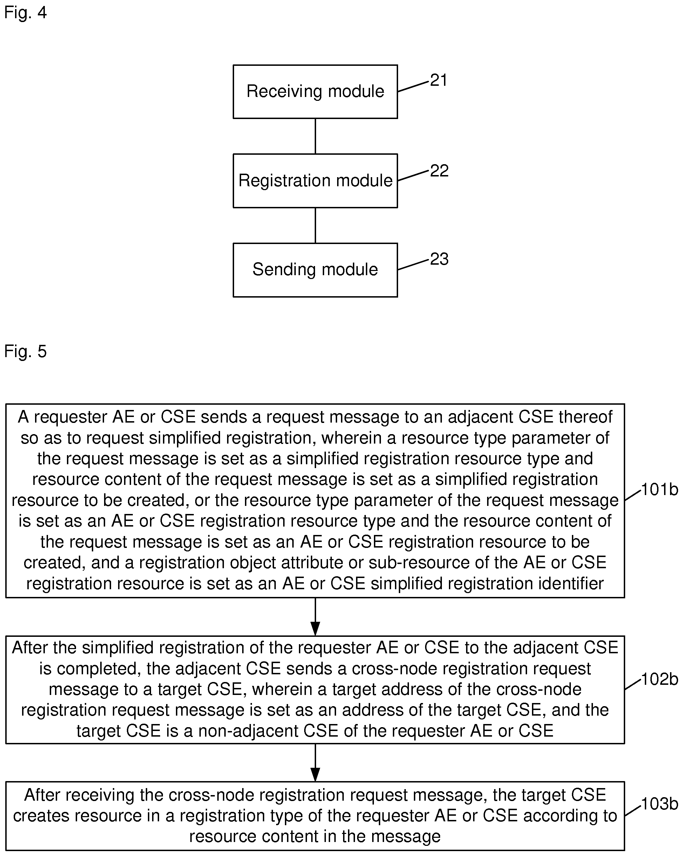

In correspondence to the above method for adjacent node registration, the embodiments of the present disclosure also provide an apparatus for adjacent node registration, which is applied to an adjacent CSE of a requester AE or CSE. As shown in Fig. 4, the apparatus includes:
a receiving module 21, configured to receive a request message from the requester AE or CSE, wherein a resource type parameter of the request message is set as a simplified registration resource type and resource content of the request message is set as a simplified registration resource to be created, or the resource type parameter of the request message is set as an AE or CSE registration resource type and the resource content of the request message is set as an AE or CSE registration resource to be created, and a registration object attribute or sub-resource of the AE or CSE registration resource is set as an AE or CSE simplified registration identifier; and
a registration module 22, configured to identify that the request message is a simplified registration request, and create resource in the simplified registration resource type of the requester AE or CSE according to the resource content of the request message.

In an implementation mode, when the resource type parameter of the request message is set as the simplified registration resource type and the resource content of the request message is set as the simplified registration resource to be created, a registration object attribute or sub-resource of the simplified registration resource is set as the AE or CSE simplified registration identifier.

In an implementation mode, the apparatus further includes: a sending module 23, configured to return, after creation of the resource in the simplified registration resource type of the requester AE or CSE via the registration module 22 is completed, a registration result response to the requester AE or CSE.

The receiving module 21 and the sending module 23 may be implemented by a communication function chip of the apparatus for adjacent node registration, and the registration module 22 may be implemented by a CPU, an MPU, a DSP or an FPGA in the apparatus for adjacent node registration.

It is noted that the simplified registration resource type defined in the embodiments of the present disclosure refers to a resource type defined by simplified registration, and resource in the simplified registration resource type will be created during the simplified registration; and the resource content of the simplified registration, defined in the embodiments of the present disclosure, refers to resource in a simplified registration type defined by the simplified registration.

The registration object attribute or resource of the AE or CSE registration resource defined in the embodiments of the present disclosure is a newly-defined attribute or resource to identify the simplified registration in the embodiments of the present disclosure.

A registration method different from the simplified registration method described in the embodiments of the present disclosure is described as a complicated registration method in the embodiments of the present disclosure, and a complicated registration resource will be created during complicated registration.

In addition, in order to implement cross-node registration (or cross-layer registration), the embodiments of the present disclosure provide a method for cross-node registration. As shown in Fig. 5, the method includes the steps as follows.

Step 101b: A requester AE or CSE sends a request message to an adjacent CSE thereof so as to request simplified registration, wherein a resource type parameter of the request message is set as a simplified registration resource type and resource content of the request message is set as a simplified registration resource to be created, or the resource type parameter of the request message is set as an AE or CSE registration resource type and the resource content of the request message is set as an AE or CSE registration resource to be created, and a registration object attribute or sub-resource of the AE or CSE registration resource is set as an AE or CSE simplified registration identifier.

Step 102b: After the simplified registration of the requester AE or CSE to the adjacent CSE is completed, the adjacent CSE sends a cross-node registration request message to a target CSE, wherein a target address of the cross-node registration request message is set as an address of the target CSE, and the target CSE is a non-adjacent CSE of the requester AE or CSE.

Step 103b: After receiving the cross-node registration request message, the target CSE creates resource in a registration type of the requester AE or CSE according to resource content in the message.

In an implementation mode, the method further includes that:
when the resource type parameter of the request message is set as the simplified registration resource type and the resource content of the request message is set as the simplified registration resource to be created, a registration object attribute or sub-resource of the simplified registration resource is set as the AE or CSE simplified registration identifier.

In an implementation mode, the method further includes that: after creating the resource in the registration type of the requester AE or CSE, the target CSE returns a registration result response to the requester AE or CSE, wherein a forwarding path of the registration result response is a reverse path relative to a forwarding path of the cross-node registration request message.

In an implementation mode, the method further includes that:
when receiving a registration success response returned by the target CSE, the requester CSE creates resource in a registration type of the target CSE on the requester CSE.

Herein, the resource in the registration type of the requester AE or CSE is a simplified registration resource or a complicated registration resource. When the resource in the registration type of the requester AE or CSE indicates the simplified registration resource, it is represented that the requester AE or CSE requests the target CSE for a simplified registration process. When the resource in the registration type of the requester AE or CSE indicates the complicated registration resource, it is represented that the requester AE or CSE requests the target CSE for a complicated registration process.

In correspondence to the above cross-node registration method, the embodiments of the present disclosure provide a system for cross-node registration, which includes: a requester AE or CSE, an adjacent CSE of the requester AE or CSE, and a target CSE.

The requester AE or CSE is configured to send a request message to the adjacent CSE thereof so as to request simplified registration, wherein a resource type parameter of the request message is set as a simplified registration resource type and resource content of the request message is set as a simplified registration resource to be created, or the resource type parameter of the request message is set as an AE or CSE registration resource type and the resource content of the request message is set as an AE or CSE registration resource to be created, and a registration object attribute or sub-resource of the AE or CSE registration resource is set as an AE or CSE simplified registration identifier.

The adjacent CSE is configured to create resource in the simplified registration resource type of the requester AE or CSE according to the resource content of the request message.

The requester AE or CSE is further configured to send, after the simplified registration to the adjacent CSE is completed, a cross-node registration request message to the target CSE via the adjacent CSE, wherein a target address of the cross-node registration request message is set as an address of the target CSE, and the target CSE is a non-adjacent CSE of the requester AE or CSE.

The target CSE is configured to create, after receiving the cross-node registration request message, resource in a registration type of the requester AE or CSE according to resource content in the message.

In an implementation mode, when the resource type parameter of the request message is set as the simplified registration resource type and the resource content of the request message is set as the simplified registration resource to be created, a registration object attribute or sub-resource of the simplified registration resource is set as the AE or CSE simplified registration identifier.

In an implementation mode, the target CSE is further configured to return, after creating the resource in the registration type of the requester AE or CSE, a registration result response to the requester AE or CSE, wherein a forwarding path of the registration result response is a reverse path relative to a forwarding path of the cross-node registration request message.

In an implementation mode, the requester CSE is further configured to create, after receiving a registration success response returned by the target CSE, resource in a registration type of the target CSE on the requester CSE.

Herein, the resource in the registration type of the requester AE or CSE is a simplified registration resource or a complicated registration resource.

The method and apparatus for adjacent node registration and the method and system for cross-node registration are further illustrated below with reference to specific embodiments in detail.

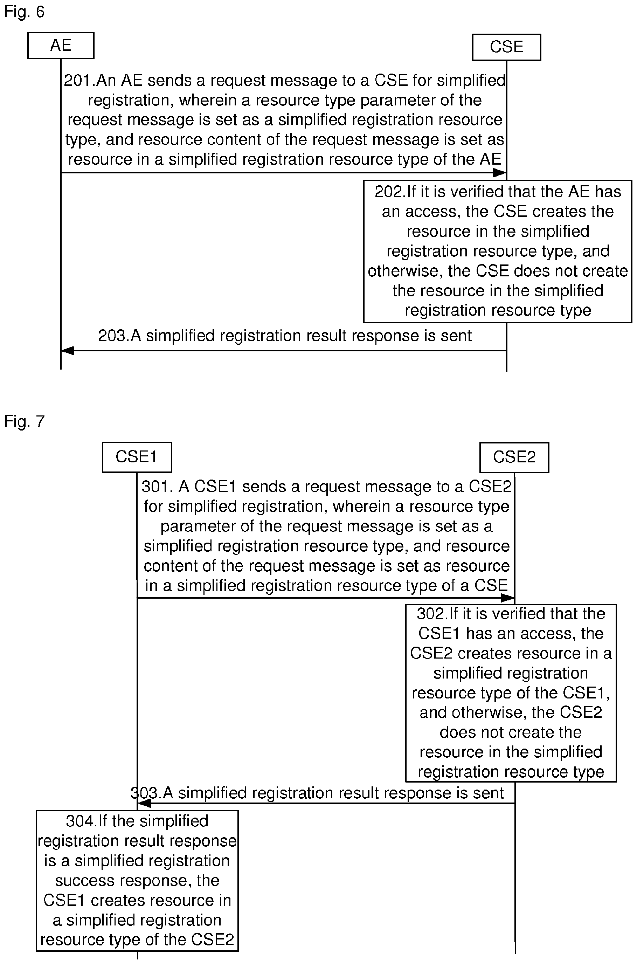

Embodiment 1: a simplified registration method for an AE and a CSE. In this embodiment, the AE and the CSE may be located at the same node or may be located at different nodes. As shown in Fig. 6, the registration method mainly includes the steps as follows.

Step 201: The AE sends a request message to the CSE for simplified registration, wherein a resource type parameter of the request message is set as a simplified registration resource type, and resource content of the request message is set as resource in a simplified registration resource type of the AE.

Step 202: If it is verified that the AE has an access, the CSE creates the resource in the simplified registration resource type for the AE according to the resource content of the request message, and otherwise, the CSE does not create the resource in the simplified registration resource type.

Step 203: The CSE sends a simplified registration result response to the AE. It is noted that if the CSE creates the resource in the simplified registration resource type in Step 202, a simplified registration success response is sent to the AE in Step 203. If the CSE does not create the resource in the simplified registration resource type in Step 202, a simplified registration failure response is sent to the AE in Step 203. In this embodiment, the simplified registration result response is the simplified registration success response.

Embodiment 2: an inter-CSE simplified registration method. As shown in Fig. 7, the method mainly includes the steps as follows.

Step 301: A CSE1 sends a request message to a CSE2 for simplified registration, wherein a resource type parameter of the request message is set as a simplified registration resource type, and resource content of the request message is set as resource in a simplified registration resource type of a CSE.

Step 302: If it is verified that the CSE1 has an access, the CSE2 creates resource in a simplified registration resource type of the CSE1 according to the resource content of the request message, and otherwise, the CSE2 does not create the resource in the simplified registration resource type.

Step 303: The CSE2 sends a simplified registration result response to the CSE1. It is noted that if the CSE2 creates the resource in the simplified registration resource type of the CSE1 in Step 302, a simplified registration success response is sent to the CSE1 in Step 303. If the CSE2 does not create the resource in the simplified registration resource type in Step 302, a simplified registration failure response is sent to the CSE1 in Step 303. In this embodiment, the simplified registration result response is the simplified registration success response.

Step 304: If the simplified registration result response is the simplified registration success response, the CSE1 creates resource in a simplified registration resource type of the CSE2.

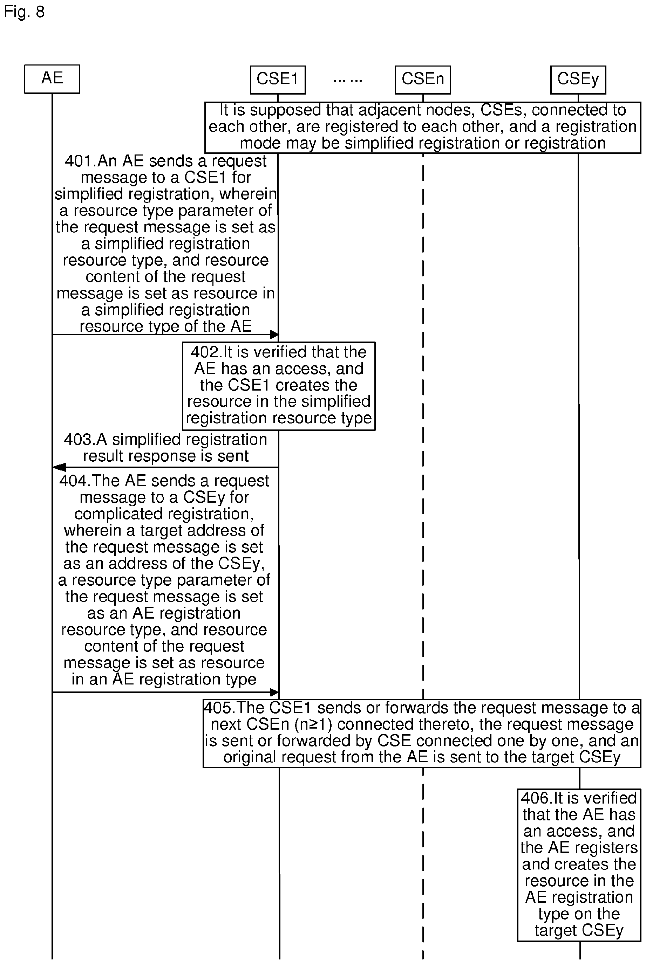

Embodiment 3: a cross-layer simplified registration and cross-layer registration method for an AE. As shown in Fig. 8, the method mainly includes the steps as follows.

In this embodiment, an AE and a CSE1 may be located at the same node or different nodes. In addition, it is supposed that adjacent nodes, a CSE1 to a CSEn (n≥1) and a CSEy, connected to each other, are registered to each other. A registration mode may be simplified registration or complicated registration.

Step 401: The AE sends a request message to the CSE1 for simplified registration, wherein a resource type parameter of the request message is set as a simplified registration resource type, and resource content of the request message is set as resource in a simplified registration resource type of the AE.

Step 402: The CSE1 verifies that the AE has an access, and the CSE1 creates the resource in the simplified registration resource type of the AE according to the resource content of the request message.

Step 403: The CSE1 sends a simplified registration result response to the AE.

Step 404: The AE sends a request message to the CSEy for complicated registration, wherein a target address of the request message is set as an address of the CSEy, a resource type parameter of the request message is set as an AE registration resource type, and resource content of the request message is set as resource in an AE registration type; and the request message for the complicated registration will be sent to the CSE1 firstly.

Step 405: The CSE1 sends or forwards the request message from the AE to a next CSEn (n≥1) connected thereto, the request message is sent or forwarded by CSE connected one by one, and an original request from the AE is sent to the CSEy.

Step 406: The CSEy verifies that the AE has an access, and the AE registers and creates the resource in the AE registration type on the CSEy.

It is noted that the AE in Step 404 to Step 406 may also send a request message to the CSEy for simplified registration. Thus, in the subsequent execution steps, the registration resource type is the simplified registration resource type, and the resource content is the resource in the simplified registration resource type of the AE.

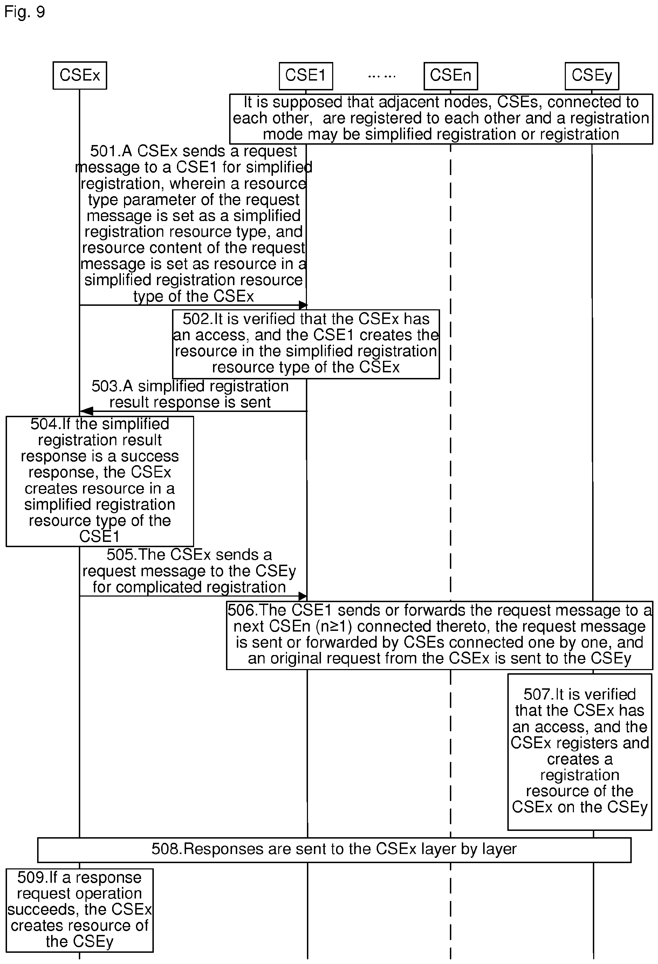

Embodiment 4: a cross-layer simplified registration and cross-layer registration method for a CSE. As shown in Fig. 9, the method mainly includes the steps as follows.

In this embodiment, it is supposed that adjacent nodes, a CSE1 to a CSEn (n≥1) and a CSEy, connected to each other, are registered to each other. A registration mode may be simplified registration or complicated registration.

Step 501: A CSEx sends a request message to the CSE1 for simplified registration, wherein a resource type parameter of the request message is set as a simplified registration resource type, and resource content of the request message is set as resource in a simplified registration resource type of the CSEx.

Step 502: The CSE1 verifies that the CSEx has an access, and the CSE1 creates the resource in the simplified registration resource type of the CSEx.

Step 503: The CSE1 sends a simplified registration result response to the CSEx.

Step 504: If the simplified registration result response is a success response, the CSEx creates resource in a simplified registration resource type of the CSE1.

Step 505: The CSEx sends a request message to the CSEy for complicated registration, wherein a target address of the request message is set as an address of the CSEy, a resource type parameter of the request message is set as a registration resource type <remoteCSE>, and resource content of the request message is set as a <remoteCSE> type resource; and the request message for the complicated registration will be sent to the CSE1 firstly.

Step 506: The CSE1 sends or forwards the request message from the CSEx to a next CSEn (n≥1) connected thereto, the request message is sent or forwarded by CSEs connected one by one, and an original request from the CSEx is sent to the CSEy.

Step 507: The CSEy verifies that the CSEx has an access, and the CSEx registers and creates a registration resource <remoteCSE> type resource of the CSEx on the CSEy.

Step 508: The CSEy sends responses to the CSEx layer by layer.

Step 509: If a response request operation succeeds, the CSEx creates a <remoteCSE> type resource of the CSEy.

It is noted that the CSEx in Step 505 to Step 509 may also send a request message to the CSEy for simplified registration. Thus, in the subsequent execution steps, the registration resource type is the simplified registration resource type, and the resource content is the resource in the simplified registration resource type of the CSEx.

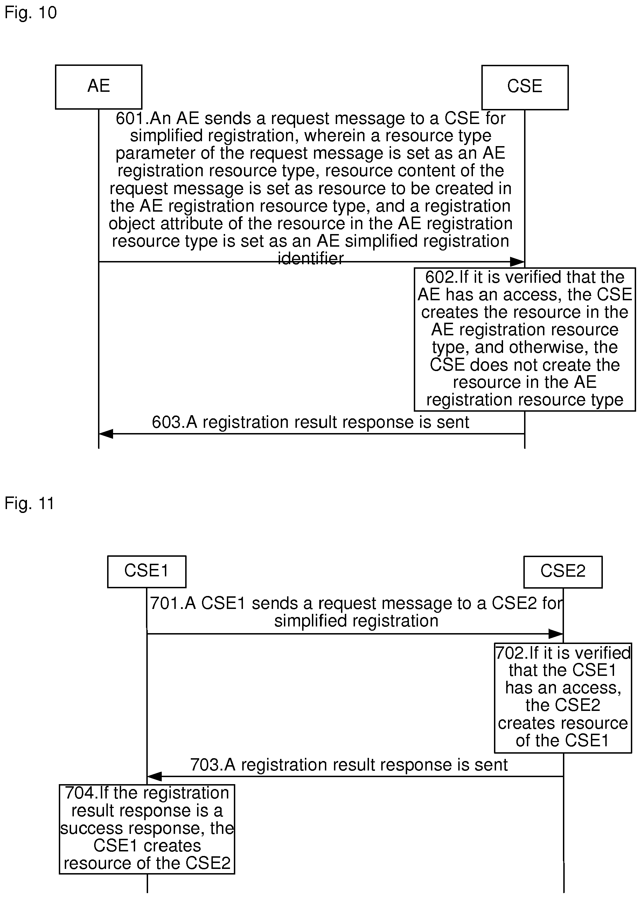

Embodiment 5: a simplified registration method for an AE and a CSE. In this embodiment, the AE and the CSE may be located at the same node or may be located at different nodes. As shown in Fig. 10, the method mainly includes the steps as follows.

Step 601: The AE sends a request message to the CSE for simplified registration, wherein a resource type parameter of the request message is set as an AE registration resource type, resource content of the request message is set as resource to be created in the AE registration resource type, and a registration object attribute of the resource in the AE registration resource type is set as an AE simplified registration identifier.

Step 602: If it is verified that the AE has an access, the CSE creates the resource in the AE registration resource type, and otherwise, the CSE does not create the resource in the AE registration resource type.

Step 603: The CSE sends a registration result response to the AE. It is noted that if the CSE creates the resource in the AE registration resource type in Step 602, a registration success response is sent to the AE in Step 603; and if the CSE does not create the resource in the AE registration resource type in Step 602, a registration failure response is sent to the AE in Step 603. In this embodiment, the registration result response is the registration success response.

Embodiment 6: an inter-CSE simplified registration method. As shown in Fig. 11, the method mainly includes the steps as follows.

Step 701: A CSE1 sends a request message to a CSE2 for simplified registration, wherein a resource type parameter of the request message is set as a CSE registration resource type <remoteCSE>, resource content of the request message is set as a <remoteCSE> resource to be created, and a registration object attribute of the <remoteCSE> resource is set as a CSE simplified registration identifier.

Step 702: If it is verified that the CSE1 has an access, the CSE2 creates a <remoteCSE> resource of the CSE1.

Step 703: The CSE2 sends a registration result response to the CSE1. It is noted that if the CSE2 creates the <remoteCSE> resource of the CSE1 in Step 702, a registration success response is sent to the CSE1 in Step 703; and if the CSE2 does not create the <remoteCSE> resource in Step 702, a registration failure response is sent to the CSE1 in Step 703. In this embodiment, the registration result response is the registration success response.

Step 704: If the registration result response is the registration success response, the CSE1 creates a <remoteCSE> resource of the CSE2.

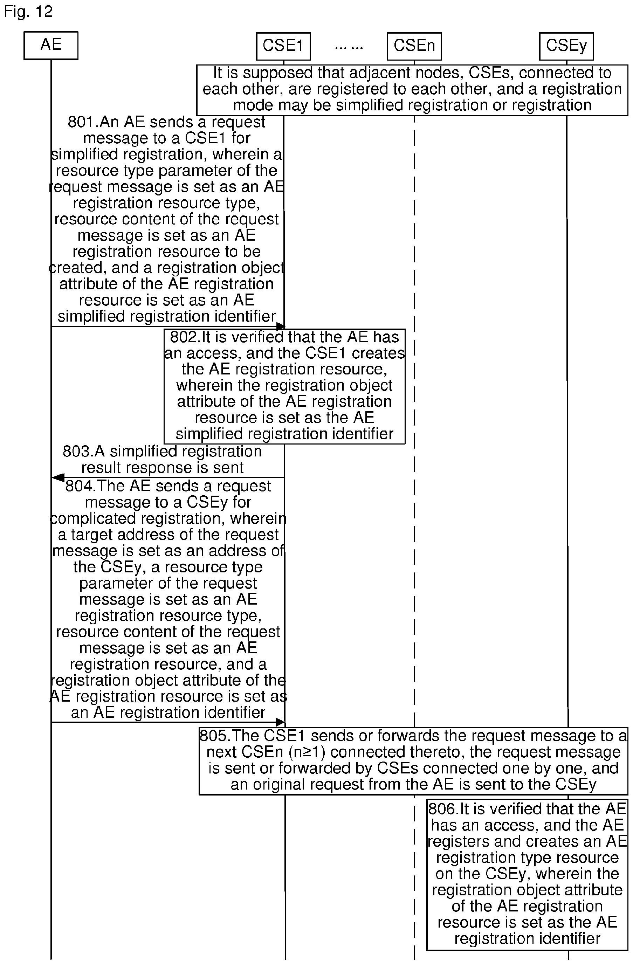

Embodiment 7: a cross-layer simplified registration and cross-layer registration method for an AE. As shown in Fig. 12, the method mainly includes the steps as follows.

In this embodiment, an AE and a CSE1 may be located at the same node or different nodes. In addition, it is supposed that adjacent nodes, a CSE1 to a CSEn (n≥1) and a CSEy, connected to each other, are registered to each other. A registration mode may be simplified registration or complicated registration.

Step 801: The AE sends a request message to the CSE1 for simplified registration, wherein a resource type parameter of the request message is set as an AE registration resource type, resource content of the request message is set as an AE registration resource to be created, and a registration object attribute of the AE registration resource is set as an AE simplified registration identifier.

Step 802: The CSE1 verifies that the AE has an access, and the CSE1 creates the AE registration resource, wherein the registration object attribute of the AE registration resource is set as the AE simplified registration identifier.

Step 803: The CSE1 sends a simplified registration result response to the AE.

Step 804: The AE sends a request message to the CSEy for complicated registration, wherein a target address of the request message is set as an address of the CSEy, a resource type parameter of the request message is set as an AE registration resource type, resource content of the request message is set as an AE registration resource, and a registration object attribute of the AE registration resource is set as an AE registration identifier; and the request message for the complicated registration will be sent to the CSE1 firstly.

Step 805: The CSE1 sends or forwards the request message from the AE to a next CSEn (n≥1) connected thereto, the request message is sent or forwarded by CSEs connected one by one, and an original request from the AE is sent to the CSEy.

Step 806: The CSEy verifies that the AE has an access, and the AE registers and creates an AE registration type resource on the CSEy, wherein the registration object attribute of the AE registration resource is set as the AE registration identifier.

It is noted that the AE in Step 804 to Step 806 may also send a request message to the CSEy for simplified registration. Thus, in the subsequent execution steps, the registration resource type is the simplified registration resource type, and the resource content is resource in a simplified registration resource type of the AE.

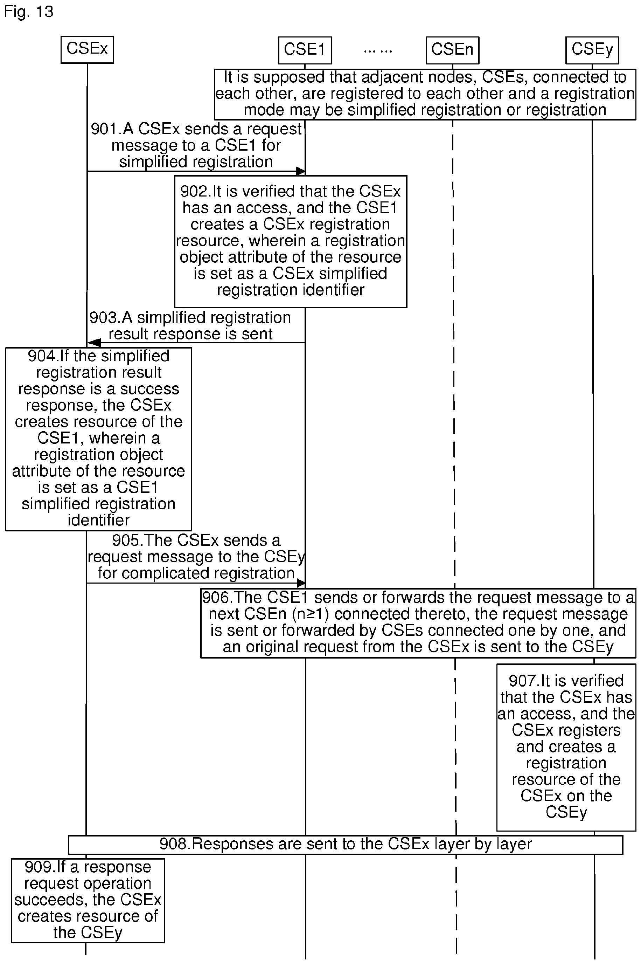

Embodiment 8: a cross-layer simplified registration and cross-layer registration method for a CSE. As shown in Fig. 13, the method mainly includes the steps as follows.

In this embodiment, it is supposed adjacent nodes, a CSE1 to a CSEn (n≥1) and a CSEy, connected to each other, are registered to each other. A registration mode may be simplified registration or complicated registration.

Step 901: A CSEx sends a request message to the CSE1 for simplified registration, wherein a resource type parameter of the request message is set as a CSEx registration resource type <remoteCSE>, resource content of the request message is set as a <remoteCSE> resource to be created, and a registration object attribute of the <remoteCSE> resource is set as a CSEx simplified registration identifier.

Step 902: The CSE1 verifies that the CSEx has an access, and the CSE1 creates <remoteCSE> resource in the CSEx registration resource type, wherein the registration object attribute of the <remoteCSE> resource is set as the CSEx simplified registration identifier.

Step 903: The CSE1 sends a simplified registration result response to the CSEx.

Step 904: If the simplified registration result response is a success response, the CSEx creates the <remoteCSE> resource of the CSE1, wherein a registration object attribute of the <remoteCSE> resource is set as a CSE1 simplified registration identifier.

Step 905: The CSEx sends a request message to the CSEy for complicated registration, wherein a target address of the request message is set as an address of the CSEy, a resource type parameter of the request message is set as a registration resource type <remoteCSE>, and resource content of the request message is set as a <remoteCSE> type resource.

Step 906: The CSE1 sends or forwards the request message from the CSEx to a next CSEn (n≥1) connected thereto, the request message is sent or forwarded by CSEs connected one by one, and an original request from the CSEx is sent to the CSEy.

Step 907: The CSEy verifies that the CSEx has an access, and the CSEx registers and creates a registration resource <remoteCSE> type resource of the CSEx on the CSEy.

Step 908: The CSEy sends responses to the CSEx layer by layer.

Step 909: If a response request operation succeeds, the CSEx creates resource of the CSEy in the <remoteCSE> type.

It is noted that the CSEx in Step 905 to Step 909 may also send a request message to the CSEy for simplified registration. Thus, in the subsequent execution steps, the registration resource type is a simplified registration resource type, and the resource content is resource in the simplified registration resource type of the CSEx.

The embodiments of the present disclosure provide a computer readable storage medium, which includes a set of computer executable instructions, the instructions being configured to execute the method for adjacent node registration at a requester AE or CSE side.

The embodiments of the present disclosure provide a computer readable storage medium, which includes a set of computer executable instructions, the instructions being configured to execute the method for adjacent node registration at an adjacent CSE side of a requester AE or CSE.

In conclusion, by means of the method and apparatus for adjacent node registration according to the embodiments of the present disclosure, simplified registration is performed between a requester AE or CSE and an adjacent CSE based on a defined simplified registration resource type, thereby solving the problem in the conventional art that it is inconvenient to manage registration resources due to creation of a plurality of repeated registration resources after the requester AE or CSE is registered to a plurality of adjacent CSEs. By means of the method and system for cross-node registration according to the embodiments of the present disclosure, cross-node registration from a requester AE or CSE to a target CSE is implemented on the basis of the method and apparatus for adjacent node registration.

Those skilled in the art shall understand that the embodiments of the present disclosure may be provided as a method, a system or a computer program product. Thus, the present disclosure may use forms of hardware, software or a combination thereof. Moreover, a form of the computer program product implemented on one or more computer available storage media (including, but not limited to, a disk memory, an optical memory or the like) containing computer available program codes may be adopted in the present disclosure.

The present disclosure is described with reference to flow charts and/or block diagrams of the method, the device (system) and the computer program product according to the embodiments of the present disclosure. It will be appreciated that each flow and/or block in the flow charts and/or the block diagrams and a combination of the flows and/or the blocks in the flow charts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flow charts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, such that a manufactured product including an instruction apparatus is generated via the instructions stored in the computer readable memory, and the instruction apparatus implements the functions designated in one or more flows of the flow charts and/or one or more blocks of the block diagrams.

These computer program instructions may also be loaded to the computers or the other programmable data processing devices, such that processing implemented by the computers is generated by executing a series of operation steps on the computers or the other programmable devices, and therefore the instructions executed on the computers or the other programmable devices provide a step of implementing the functions designated in one or more flows of the flow charts and/or one or more blocks of the block diagrams.

The above is only the preferred embodiments of the present disclosure and is not intended to limit the protection scope of the present disclosure.

## Claims

1. A method for adjacent node registration, comprising:
sending, by a requester Application Entity (AE) or Common Service Entity (CSE), a request message to an adjacent CSE thereof so as to request simplified registration,
wherein a resource type parameter of the request message is set as a simplified registration resource type and resource content of the request message is set as a simplified registration resource to be created; or the resource type parameter of the request message is set as an AE or CSE registration resource type, the resource content of the request message is set as an AE or CSE registration resource to be created, and a registration object attribute or sub-resource of the AE or CSE registration resource is set as an AE or CSE simplified registration identifier.

2. The method according to claim 1, further comprising:
setting, when the resource type parameter of the request message is set as the simplified registration resource type and the resource content of the request message is set as the simplified registration resource to be created, a registration object attribute or sub-resource of the simplified registration resource as the AE or CSE simplified registration identifier.

3. The method according to claim 1 or 2, further comprising:
receiving, by the requester AE, a registration result response returned after the adjacent CSE creates the simplified registration resource; or,
receiving, by the requester CSE, a registration result response returned after the adjacent CSE creates the simplified registration resource, and when the registration result response is a registration success response, creating resource in the simplified registration resource type of the adjacent CSE on the requester CSE.

4. A method for adjacent node registration, comprising:
receiving, by a Common Service Entity (CSE), a request message from an adjacent requester Application Entity (AE) or CSE, wherein a resource type parameter of the request message is set as a simplified registration resource type and resource content of the request message is set as a simplified registration resource to be created; or the resource type parameter of the request message is set as an AE or CSE registration resource type, the resource content of the request message is set as an AE or CSE registration resource to be created, and a registration object attribute or sub-resource of the AE or CSE registration resource is set as an AE or CSE simplified registration identifier; and
identifying, by the CSE which received the request message, that the request message is a simplified registration request, and creating resource in the simplified registration resource type of the requester AE or CSE according to the resource content of the request message.

5. An apparatus for adjacent node registration, applied to a requester Application Entity (AE) or Common Service Entity (CSE), the apparatus comprising:
a message sending module, configured to send a request message to an adjacent CSE of the requester AE or CSE so as to request simplified registration; and
a setting module, configured to set a resource type parameter of the request message as a simplified registration resource type and set resource content of the request message as a simplified registration resource to be created; or set the resource type parameter of the request message as an AE or CSE registration resource type, set the resource content of the request message as an AE or CSE registration resource to be created, and set a registration object attribute or sub-resource of the AE or CSE registration resource as an AE or CSE simplified registration identifier.

6. The apparatus according to claim 5, further comprising:
a receiving module, configured to receive a registration result response returned after the adjacent CSE creates the simplified registration resource; and
a resource creation module, configured to create, when the receiving module of the requester CSE receives a registration success response returned by the adjacent CSE, resource in the simplified registration resource type of the adjacent CSE on the requester CSE.

7. An apparatus for adjacent node registration, applied to an adjacent Common Service Entity (CSE) of a requester Application Entity (AE) or CSE, the apparatus comprising:
a receiving module, configured to receive a request message from the requester AE or CSE, wherein a resource type parameter of the request message is set as a simplified registration resource type and resource content of the request message is set as a simplified registration resource to be created; or the resource type parameter of the request message is set as an AE or CSE registration resource type, the resource content of the request message is set as an AE or CSE registration resource to be created, and a registration object attribute or sub-resource of the AE or CSE registration resource is set as an AE or CSE simplified registration identifier; and
a registration module, configured to identify that the request message is a simplified registration request, and create resource in the simplified registration resource type of the requester AE or CSE according to the resource content of the request message.

8. A method for cross-node registration, comprising:
sending, by a requester Application Entity (AE) or Common Service Entity (CSE), a request message to an adjacent CSE thereof so as to request simplified registration, wherein a resource type parameter of the request message is set as a simplified registration resource type and resource content of the request message is set as a simplified registration resource to be created; or the resource type parameter of the request message is set as an AE or CSE registration resource type, the resource content of the request message is set as an AE or CSE registration resource to be created, and a registration object attribute or sub-resource of the AE or CSE registration resource is set as an AE or CSE simplified registration identifier;
sending, after the simplified registration of the requester AE or CSE to the adjacent CSE is completed, a cross-node registration request message to a target CSE via the adjacent CSE, wherein a target address of the cross-node registration request message is set as an address of the target CSE, and the target CSE is a non-adjacent CSE of the requester AE or CSE; and
creating, after the target CSE receives the cross-node registration request message, resource in a registration type of the requester AE or CSE according to resource content in the message.

9. The method according to claim 8, further comprising:
setting, when the resource type parameter of the request message is set as the simplified registration resource type and the resource content of the request message is set as the simplified registration resource to be created, a registration object attribute or sub-resource of the simplified registration resource as the AE or CSE simplified registration identifier.

10. The method according to claim 8, further comprising:
returning, after the target CSE creates the resource in the registration type of the requester AE or CSE, a registration result response to the requester AE or CSE, wherein a forwarding path of the registration result response is a reverse path relative to a forwarding path of the cross-node registration request message.

11. The method according to claim 10, further comprising:
creating, after the requester CSE receives a registration success response returned by the target CSE, resource in a registration type of the target CSE on the requester CSE.

12. The method according to any one of claims 8 to 11, wherein the resource in the registration type of the requester AE or CSE is a simplified registration resource or a complicated registration resource.

13. A system for cross-node registration, comprising: a requester Application Entity (AE) or Common Service Entity (CSE), an adjacent CSE of the requester AE or CSE, and a target CSE, wherein
the requester AE or CSE is configured to send a request message to the adjacent CSE thereof so as to request simplified registration, wherein a resource type parameter of the request message is set as a simplified registration resource type and resource content of the request message is set as a simplified registration resource to be created; or the resource type parameter of the request message is set as an AE or CSE registration resource type, the resource content of the request message is set as an AE or CSE registration resource to be created, and a registration object attribute or sub-resource of the AE or CSE registration resource is set as an AE or CSE simplified registration identifier;
the adjacent CSE is configured to create resource in the simplified registration resource type of the requester AE or CSE according to the resource content of the request message;
the requester AE or CSE is further configured to send, after the simplified registration to the adjacent CSE is completed, a cross-node registration request message to the target CSE via the adjacent CSE, wherein a target address of the cross-node registration request message is set as an address of the target CSE, and the target CSE is a non-adjacent CSE of the requester AE or CSE; and
the target CSE is configured to create, after receiving the cross-node registration request message, resource in a registration type of the requester AE or CSE according to resource content in the message.

14. The system according to claim 13, wherein the target CSE is further configured to return, after creating the resource in the registration type of the requester AE or CSE, a registration result response to the requester AE or CSE, a forwarding path of the registration result response being a reverse path relative to a forwarding path of the cross-node registration request message.

15. The system according to claim 14, wherein the requester CSE is further configured to create, after receiving a registration success response returned by the target CSE, resource in a registration type of the target CSE on the requester CSE.

16. The system according to claim 13, 14 or 15, wherein the resource in the registration type of the requester AE or CSE is a simplified registration resource or a complicated registration resource.

17. A computer readable storage medium, comprising a set of computer executable instructions, the instructions being configured to execute the method according to any one of claims 1 to 3.

18. A computer readable storage medium, comprising a set of computer executable instructions, the instructions being configured to execute the method according to claim 4.
